(19) Europäisches Patentamt
European Patent Office
Office européen des brevets

(11) Veröffentlichungsnummer: **0 431 412 A2**

# (12) EUROPÄISCHE PATENTANMELDUNG

(21) Anmeldenummer: **90122365.1**

(22) Anmeldetag: **23.11.90**

(51) Int. Cl.5: **C08G 18/10**, C08G 18/32, C08G 18/66

(30) Priorität: **06.12.89 DE 3940270**

(43) Veröffentlichungstag der Anmeldung: **12.06.91 Patentblatt 91/24**

(84) Benannte Vertragsstaaten: **AT CH DE ES FR GB IT LI NL**

(71) Anmelder: **BAYER AG**

**W-5090 Leverkusen 1 Bayerwerk(DE)**

(72) Erfinder: **Grögler, Gerhard, Dr.**
**von Diergardtstrasse 48**
**W-5090 Leverkusen 1(DE)**
Erfinder: **Thiery, Urs, Dr.**
**Goethestrasse 71**
**W-4047 Dormagen(DE)**
Erfinder: **Ruckes, Andreas, Dr.**
**Herderstrasse 13**
**W-5090 Leverkusen 3(DE)**
Erfinder: **Kopp, Richard, Dr.**
**Bilharzstrasse 15**
**W-5000 Köln 80(DE)**
Erfinder: **Hess, Heinrich, Dr.**
**Auf der Schildwache 13a**
**W-5000 Köln 80(DE)**

## (54) Verfahren zur Herstellung von wärmestandfesten Polyurethanharnstoffelastomeren.

(57) Die Erfindung betrifft ein technisch vereinfachtes Verfahren zur Herstellung von Polyurethanharnstoff-Elastomeren, bei der hochschmelzende, in fester Phase vorliegende aromatische Diamine mit Polyisocyanaten bzw. Isocyanat-Prepolymeren in heterogener Reaktion umgesetzt werden.

EP 0 431 412 A2

Xerox Copy Centre

# VERFAHREN ZUR HERSTELLUNG VON WÄRMESTANDFESTEN POLYURETHANHARNSTOFF-ELASTOMEREN

Die vorliegende Erfindung betrifft ein technisch vereinfachtes Verfahren zur Herstellung von Polyurethanharnstoff-Elastomeren, bei der hochschmelzende, in fester Phase vorliegende aromatische Diamine mit Polyisocyanaten bzw. Isocyanat-Prepolymeren in heterogener Reaktion umgesetzt werden.

Die Herstellung von Polyurethanharnstoff-Elastomeren aus Polyisocyanaten, höhermolekularen Polyhydroxylverbindungen und aromatischen Diaminen ist bekannt. Um angemessene Verarbeitungszeiten für Reaktivsysteme aus den genannten Ausgangskomponenten zu gewährleisten, setzt man die technisch meistverwendeten reaktionsfähigen aromatischen Isocyanate zweckmäßigerweise mit träge reagierenden Diaminen um. Als Diamine haben sich in diesem Zusammenhang in der Praxis vor allem solche aromatischen Diamine bewährt, deren Basizität und damit auch Reaktivität gegenüber Isocyanaten durch Einführung von Halogen-oder Carboxy-Substituenten herabgesetzt ist. Als Beispiel sei das bisher am meisten verwendete 3,3'-Dichlor-4,4'-diaminodiphenylmethan (MOCA) genannt.

In der US-Patentschrift 3 891 606 wird die Vernetzung von NCO-Präpolymeren aus Polyhydroxylverbindungen und einem Überschuß an Polyisocyanaten mit aromatischen Diaminen beschrieben, deren Reaktivität gegenüber Isocyanatgruppen durch Komplexbildung mit gewissen Alkalimetallsalzen herabgesetzt ist. Der Nachteil dieses Verfahrens liegt darin, daß es auf zwei spezielle aromatische Diamine beschränkt ist. Darüberhinaus muß der Komplex zwischen dem aromatischen Diamin und dem Alkalimetallsalz in einem gesonderten Verfahrensschritt hergestellt werden.

Ein weitere Möglichkeit der Steuerung der Reaktionsgeschwindigkeit zwischen Polyisocyanaten und aromatischen Diaminen besteht darin, die Reaktion in einem organischen Lösungsmittel auszuführen. Verfahren dieser Art werden beispielsweise in US-Patent 3 926 922 und in der japanischen Offenlegungsschrift 9195/70 beschrieben. Der Nachteil einer Mitverwendung von organischen Lösungsmitteln liegt auf der Hand: Einerseits wird die Feuer- und Explosionsgefahr erhöht und andererseits ist aus ökonomischen und ökologischen Gründen eine technisch aufwendige Rückgewinnung des Lösungsmittels erforderlich.

Über die Herstellung von Polyurethanharnstoffen durch Umsetzung von Polyisocyanaten mit aromatischen Diaminen in heterogener Phase ist bisher nur wenig bekannt. Die technisch im allgemeinen besonders interessanten aromatischen Diamine mit höherem Schmelzpunkt werden gemäß Stand der Technik entweder in gelöster Form angewandt, was mit den eben beschriebenen Nachteilen verbunden ist, oder aber in der Schmelze mit Polyisocyanaten umgesetzt. Die Verarbeitung von aromatischen Diaminen in der Schmelze wird beispielsweise in der schon oben erwähnten US-Patentschrift 3 926 922 oder in der Deutschen Auslegeschrift 1 122 699 beschrieben. Gegenstand der DE-AS 1 122 699 ist ein Verfahren zur Herstellung von Polyurethanelastomeren durch Vernetzung von flüssigen Isocyanat-Präpolymeren durch Umsetzung mit Gemischen aus primären Diaminen und mehrere Hydroxylgruppen aufweisenden Verbindungen unter Formgebung, in welchem eine Dispersion eines pulverförmigen kristallinen Diamins in einem flüssigen, mehrere Hydroxylgruppen aufweisenden Polyester, Polyether oder in Rizinusöl in das Präpolymere bei einer unter dem Schmelzpunkt des Diamins liegenden Temperatur eingebracht und die Masse bei Temperaturen oberhalb des Schmelzpunktes des Diamins in der Mischung in an sich bekannter Weise ausgehärtet wird. Die eigentliche "Aminvernetzung" findet also auch bei diesem Verfahren in flüssiger, homogener Phase statt. Nachteilig sind bei dem Verfahren der DE-AS 1 122 699 insbesondere die bei der Verarbeitung hochschmelzender Diamine, wie z. B. 1,5-Naphthylendiamin (m.p. = 189 °C) oder 4,4'-Diaminodiphenylether (m.p. = 186 °C), erforderlichen hohen Temperaturen.

In der US-PS 3 105 062 wird ein Verfahren zur Herstellung von Polyurethanharnstoffen beschrieben, bei dem Isocyanatgruppen enthaltende höhermolekulare Voraddukte mit vorzugsweise aromatischen Diaminen in heterogener Phase umgesetzt werden. Die Verfestigung dieser Reaktionsmischungen erfolgt bei einer Temperatur, bei der das "Zwei-Phasensystem" in ein "Ein-Phasensystem" übergeht. Diese Temperatur liegt in der Regel bei 100 bis 170 °C.

Die in US-PS 3 105 062 zitierten aromatischen Diamine zeigen jedoch in dem Reaktionsmedium (NCO-Voraddukt) noch eine - wenn auch geringe - Löslichkeit, so daß bei dem Mischvorgang der beiden Komponenten auch bei Raumtemperatur bereits unkontrollierbare Vorreaktionen ablaufen. Die Folge ist, daß die Reaktionsansätze in sehr kurzer Zeit aufdicken und man zum Teil pastenartige Formulierungen erhält. Diese sind im üblichen Gießverfahren nur noch schwer zu verarbeiten und müssen daher unter Druckanwendung in die gewünschte Form gebracht werden, bevor die eigentliche Verfestigung durch Hitzeeinwirkung erfolgt. Die Lagerstabilität der aufgedickten Reaktionsmischungen (Topfzeit) ist gemäß US-PS 3 105 062 ausreichend für die weitere Verarbeitung (Formgebung unter Druck, Beschichtung). Sie beträgt mehrere Stunden. Aus den angeführten Beispielen ist zu entnehmen, daß es sich vorzugsweise um

Reaktionsmischungen handelt, die eine maximale Topfzeit von etwa einer Stunde besitzen. Sie können daher nicht als Langzeit-Systeme betrachtet werden.

In der US-PS 3 105 062 wird ausdrücklich darauf hingewiesen, daß die Verwendung der dort genannten - nur in fester Form vorliegenden Diamine - im Einstufen-Prozeß nur zu unbefriedigenden Polyurethan-Formkörpern führt. In diesem Falle erfolgt in verstärktem Maße die unerwünschte Vorreaktion des Diamins mit dem Diisocyanat, wobei der schwer lösliche Polyharnstoff im Reaktionsgemisch ausfällt und nicht mehr weiter reagiert.

In der DE-OS 26 35 400 wird ein weiteres Verfahren zur Herstellung von Polyurethanharnstoff-Elastomeren beschrieben, bei dem in ein- oder mehrstufigem Verfahren aromatische Diamine als Kettenverlängerer zur Reaktion gelangen. Dieses Verfahren ist dadurch gekennzeichnet, daß die aromatischen Diamine in fester Form in den Reaktionsmischungen vorliegen und einen Schmelzpunkt oberhalb von 130 °C aufweisen. Die Hitzeverfestigung dieser Ansätze erfolgt in einem Temperaturbereich von 80 bis 120 °C und damit unterhalb des Schmelzpunktes des aromatischen Diamins. Bedingt durch die Auswahl der entsprechenden Diamine als Kettenverlängerer erfolgt mit dem NCO-haltigen Voraddukt (NCO-Präpolymer) keine vorläufige Vorreaktion, die zu einer Aufdickung der Ansätze führt. Solche Systeme können demgemäß auch im Gießverfahren gut verarbeitet werden. Da die Topfzeit dieser Reaktivsysteme erheblich erhöht ist, können nach diesem Verfahren viele aromatische Diamine eingesetzt werden, die nach der bisher bekannten Arbeitstechnik nur sehr schlecht zu verarbeiten waren.

Aus den in DE-OS 26 35 400 angegebenen Beispielen ist zu entnehmen, daß die Topfzeit der flüssigen Reaktionsmischungen je nach Reaktivität bzw. Löslichkeit des aromatischen Diamins in einem Bereich von wenigen Minuten bis mehrere Stunden liegt. Für übliche Verarbeitungsbedingungen, z. B. im Handgießverfahren sind diese Reaktionsansätze, insbesondere die mit längerer Topfzeit, meist ohne große Schwierigkeit zu verarbeiten. Problematisch wird es dagegen, wenn infolge Maschinenausfällen oder anderen Zwangspausen eine längere Unterbrechung zwischen Herstellung der Reaktionsansätze und Verfestigungsphase vorliegt. Die Forderung nach langer Verarbeitungszeit bei niederer Temperatur und kurzer Verfestigungszeit bei erhöhter Temperatur, wird daher in der Praxis immer dringender.

Die fertigen PUR-Kunststoffe sollen im allgemeinen gute mechanische Eigenschaften und vielfach auch eine dem Verwendungszweck angepaßte Wärmestabilität besitzen. Nach dem Stand der Technik ist die Wärmestabilität von PUR-Elastomeren stark von der Art der Kettenverlängerer abhängig. Werden zur Herstellung von Elastomeren z. B glykolische Kettenverlängerer verwendet, so resultieren PUR-Körper mit geringerer Wärmestabilität als bei Verwendung von Aminogruppen enthaltenden Verbindungen. Selbstverständlich sind innerhalb der jeweiligen Art von Kettenverlängerern (OH- oder $NH_2$-gruppenhaltige Verbindungen) auch noch deutliche Unterschiede bezüglich des Wärmestandes zu erkennen.

Das Ziel der vorliegenden Erfindung war daher, ein Verfahren zur Herstellung von Polyurethanharnstoffen zu finden, bei dem die Ausgangskomponenten der betreffenden Reaktionssysteme (hochmolekulare Polyole bzw. NCO-Voraddukte und $NH_2$-Gruppen enthaltende niedermolekulare Kettenverlängerer - und gegebenenfalls weitere Hilfs- und Zusatzstoffe) bei Raumtemperatur über mehrere Wochen oder im optimalen Falle in einem Temperaturbereich von 50 °C mindestens 14 Tage in unreagiertem Zustand verbleiben. Letztere Reaktionsansätze können dann als "Einkomponentensysteme" bezeichnet werden. Erst bei Einwirkung von höherer Temperatur werden diese zur Verfestigung gebracht. Wünschenswert ist weiterhin, daß sich die bei der Verarbeitungstemperatur im gießbaren Zustand befindlichen Ansätze in wirtschaftlich interessanter Reaktionszeit verfestigen lassen.

Der vorliegenden Erfindung liegt auch der Gedanke zugrunde, geeignete Aminogruppen enthaltende Kettenverlängerer zu finden, die in der Ausgangskomponente, z.B. im NCO-Voraddukt, bei niedriger Temperatur eine nur minimale, aber bei höherer Temperatur eine gute Löslichkeit besitzen, so daß während der Verfestigungsphase der Ansätze ein möglichst hochmolekularer Aufbau des Polyurethan-Harnstoffes gewährleistet wird.

Das Ziel der vorliegenden Erfindung war weiterhin, ein Verfahren zur Herstellung von Polyurethanharnstoff-Elastomeren zu finden, bei dem hochwertige Elastomere mit möglichst hohem Wärmestand erhalten werden.

Es wurde nun überraschenderweise gefunden, daß feste hochschmelzende Diamine der allgemeinen Formel

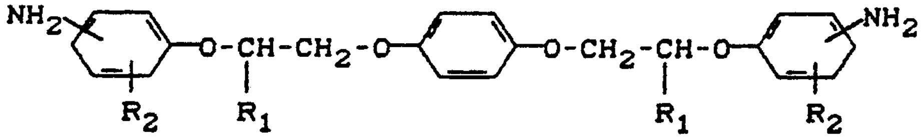

bei denen sich die $NH_2$-Gruppen in o-, m- oder p-Stellung zum Ether-Sauerstoff befinden und $R_1$ und $R_2$ Wasserstoff oder Alkylgruppen, vorzugsweise Methylgruppen, bedeuten, bei der Verarbeitung im Einstufen- oder Prepolymerverfahren bei Raumtemperatur lagerstabile Reaktionsmischungen ergeben. Die Lagerstabilität solcher Reaktionssysteme liegt in einem Zeitraum von Tagen bis Wochen bei 50° C.

Werden Verbindungen verwendet, bei denen $R_1$ und $R_2$ Wasserstoff bedeuten und die $NH_2$-Gruppe in p-Stellung zu Ether-Sauerstoff steht, so erhält man Einkomponentensysteme mit unbegrenzter Lagerstabilität bei Raumtemperatur oder bei erhöhter Temperatur bis 50° C. Voraussetzung ist hierbei, daß diese Kombination vor Einwirkung der Luftfeuchtigkeit geschützt werden, um eine unerwünschte Reaktion der NCO-Gruppen mit Wasser zu vermeiden.

Gegenstand der vorliegenden Erfindung ist nun ein Verfahren zur Herstellung von Polyurethanharnstoff-Elastomeren aus

a) Verbindungen mit mindestens zwei gegenüber Isocyanatgruppen reaktionsfähigen Gruppen des Molgewichts 400 bis 10 000, vorzugsweise 400 bis 6000,

b) Polyisocyanaten,

c) aromatischen Diaminoverbindungen sowie gegebenenfalls

d) in der Polyurethanchemie an sich bekannten Hilfs- und Zusatzstoffen,

welches dadurch gekennzeichnet ist, daß als aromatische Diaminoverbindungen solche der allgemeinen Formel

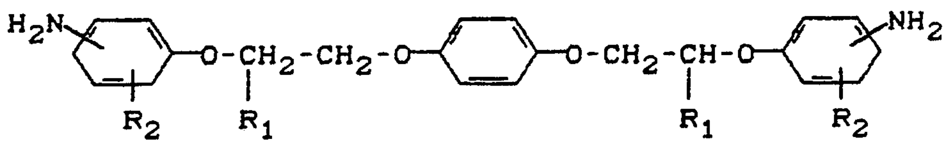

bei denen sich die Aminogruppen in o-, m- oder p-Stellung zum Ether-Sauerstoff befinden und $R_1$ und $R_2$ Wasserstoff oder Alkylgruppen, vorzugsweise Methylgruppen, bedeuten, eingesetzt wrden.

Die Verfestigung dieser Systeme erfolgt dann zu einem beliebigen Zeitpunkt durch Einwirkung von Hitze (140 bis 200° C). Man erhält Polyurethan-Elastomere mit sehr guten mechanischen Eigenschaften und hohem Wärmestand.

Werden die erfindungsgemäßen Kettenverlängerer dagegen in gelöster Form den Polyisocyanaten bzw. NCO-Voraddukten zugesetzt, so verhalten sie sich wie übliche aromatische Diamine. Nach wenigen Sekunden erfolgt Vernetzung des Reaktionsansatzes und das verquallte Folgeprodukt ist nicht mehr weiter zu verarbeiten.

Für die lange Standzeit der erfindungsgemäßen Reaktionsmischungen ist daher die Reaktivität des in heterogener Phase vorliegenden Kettenverlängerers gegenüber den NCO-Gruppen der Polyisocyanate bzw. NCO-Gruppen der höhermolekularen Voraddukte nur von geringer Bedeutung. Im wesentlichen hängt die Vernetzungsgeschwindigkeit vielmehr von der Tendenz der Diamine ab, sich in der Reaktionsmischung aufzulösen. Demzufolge ist die Lagerstabilität der Reaktionsansätze auch stark abhängig von der Art der Ausgangsprodukte, z.B. der dem NCO-Voraddukt zugrunde liegenden Polyols. Durch Verwendung geeigneter Polyole kann auch die Vernetzungszeit bzw. die Vernetzungstemperatur der Ansätze im gewünschen Sinne beeinflußt werden.

Werden z. B. zur Herstellung der NCO-Voraddukte die handelsüblichen Polypropylenglykolether (aus Propylenoxid + $H_2O$) verwendet, so erhält man in Abmischung mit geeigneten Diaminen bei Raumtemperatur lagerstabile Einkomponentensysteme. Die Verfestigung solcher Ansätze erfolgt bei den vorgegebenen Temperaturen aber erst nach sehr langer Hitzeeinwirkung. Während dieser Zeit können unkontrollierbare Nebenreaktionen des NCO-Voradduktes ablaufen (z. B. Trimerisierung, Allophanatisierung), so daß unbefriedigende Elastomere erhalten werden.

Diese lange Verfestigungszeit kann jedoch erniedrigt werden, wenn als Ausgangskomponenten z. B. Polypropylenglykolether verwendet werden, die zusätzlich Ethylenoxid-Einheiten enthalten. Der Charakter

des Einkomponentensystems wird dadurch nicht verändert.

Auf der anderen Seite ist der Einsatz von reinem Polypropylenglykolether dann angebracht, wenn die $NH_2$-Gruppen enthaltende Gegenkomponente eine geringfügig bessere Löslichkeit besitzt, als in obigen Fällen beschrieben.

Dies gilt auch bei Verwendung von Polyestern (z. B. Polyadipat) zur Herstellung des NCO-Voradduktes. Hierbei kann durch Auswahl der niedermolekularen Glykole (Veresterungskomponenten) ein wesentlicher Einfluß auf die Verarbeitungscharakteristik der Ansätze erzielt werden.

Keinesfalls darf jedoch beim Abmischen beider Reaktionskomponenten (NCO-Voraddukt und aromatisches Diamin) bei Raumtemperatur oder leicht erhöhter Temperatur eine Vorverdickung infolge vorzeitiger Polyaddition der Reaktionsansätze erfolgen.

Der einfachste Vertreter dieser Stoffklasse ist auf folgendem Syntheseweg technisch leicht zugänglich:

Der aus 2 Mol Ethylenoxid und 1 Mol p-Hydrochinon erhaltende Hydrochinon-bishydroxyethylether (1) wird mit Natriumhydroxid und 2 Mol p-Nitrochlorbenzol in einem geeigneten Lösungsmittel - wie in DE 3 722 499 beschrieben - umgesetzt. Das auf diese Weise erhaltene Nitro-Derivat (2) wird nach Isolierung zum Endprodukt (3) hydriert (vgl. Beispiel).

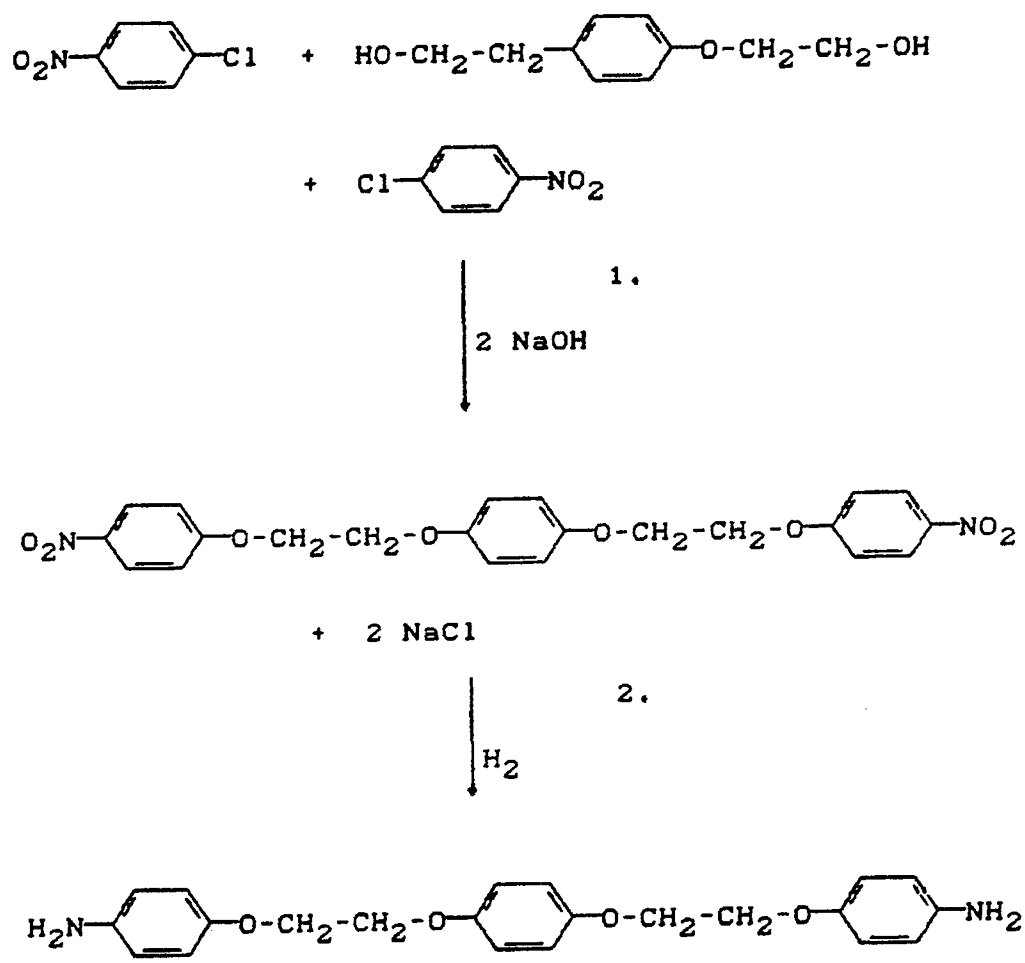


3.

(Fp.: 215° C)

Die fest anfallenden Diamine werden im allgemeinen zunächst fein gemahlen, was z.B. in einer Kugelmühle geschehen kann, bis sie eine durchschnittliche Korngröße von 1 bis 100 µm, vorzugsweise 1 bis 50 µm (µm = Micrometer) aufweisen.

Bevorzugte Ausgangskomponenten für die Herstellung der $NH_2$-Gruppen enthaltenden Kettenverlängerer sind z.B.:

2-Nitrochlorbenzol

2-Nitrofluorbenzol
4-Nitrochlorbenzol
4-Nitrofluorbenzol
1-Methyl-2-nitro-3-chlorbenzol
1-Methyl-2-nitro-3-fluorbenzol
1-Methyl-4-nitro-5-chlorbenzol
1-Methyl-4-nitro-5-fluorbenzol
1-Methyl-2-nitro-6-chlorbenzol
1-Methyl-2-nitro-6-fluorbenzol

Besonders bevorzugt sind 4-Nitrochlorbenzol und 2-Nitrochlorbenzol.

Selbstverständlich können auch Mischungen an den obengenannten Diaminen und anderen in der PUR-Chemie bekannten Kettenverlängerern mit mindestens zwei gegenüber Isocyanaten reaktionsfähigen Wasserstoffatomen mit einem Mol-Gewicht von 60 bis 400 eingesetzt werden.

Für das erfindungsgemäße Verfahren zur Herstellung von wärmestabilen Polyurethanharnstoffen können die oben genannten festen Diaminoverbindungen gemäß DE-OS 3 429 149 auch in retardierter Form eingesetzt werden. So können die Diaminoverbindungen vor der Verwendung als Kettenverlängerer z. B. in einem inerten Lösungsmittel oder bevorzugt in Suspension in einem hochmolekularen Polyol mit geringen Mengen eines geeigneten Polyisocyanates behandelt werden. Hierbei bildet sich auf der Teilchenoberfläche des Diamins eine dünne Polyharnstoff-Hülle, die als Diffusions-Sperrschicht dient. Bei einer bestimmten Temperatur wird diese Diffusions-Sperrschicht zerstört und die Verfestigung des Ansatzes wird eingeleitet.

Mit diesen so modifizierten (retardierten) Diaminoverbindungen (entweder als Pulver oder als Suspension in Polyol) erhält man in Kombination mit NCO-Voraddukten Reaktivsysteme, die eine deutlich längere Lagerstabilität aufweisen als solche Systeme, bei denen der Kettenverlängerer nicht mit einer Diffusions-Sperrschicht versehen wurde.

Die für das erfindungsgemäße Verfahren zur Herstellung der NCO-Gruppen aufweisenden Voraddukte geeigneten Polyhydroxylverbindungen haben ein Molekulargewicht von etwa 400 bis 10.000, vorzugsweise 600 bis 6.000. Es handelt sich dabei um mindestens zwei, vorzugsweise 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Polyethylenglykol, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z. B. c-Caprolacton oder Hydroxycarbonsäuren, z. B. ω-Hydroxycapronsäure, sind einsetzbar.

Diese Polyesterdiole wurden bevorzugt verwendet.

Auch die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole oder Amine, z. B. Ethylenglykol, Propylenglykol-(1,3) oder -(1,2), Trimethylolpropan, 4,4'-Dihydroxydiphenylpropan, Anilin, Ammoniak, Ethanolamin oder Ethylendiamin hergestellt. Auch Sucrosepolyether, wie sie z. B. in den deutschen Auslegeschriften 1 176

358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol und Acrylnitril in Gegenwart von Polyethern entstehen (amerikanische Patentschriften 3.383.351, 3.304.273, 3.523.093, 3.110.695, deutsche Patentschrift 1.152.536), sind geeignet, ebenso OH-Gruppen aufweisende Polybutadiene.

Unter den Polythioethern seien insbesondere die Kondensationsprodukte von Thiodiglykol mit sich selbst und/ oder mit anderen Glykolen, Dicarbonsäuren, Formaldehyd, Aminocarbonsäuren oder Aminoslkoholen angeführt. Je nach den Co-Komponenten handelt es sich bei den Produkten um Polythiomischether, Polythioetherester oder Polythioetheresteramide.

Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diethylenglykol, Triethylenglykol oder Tetraethylenglykol mit Diarylcarbonaten, z. B. Diphenylcarbonat, oder mit Phosgen hergestellt werden können.

Zu den Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harzen bzw. an Harnstoff-Formaldehydharzen können im erfindungsgemäßen Verfahren eingesetzt werden.

Vertreter dieser erfindungsgemäß zu verwendenden Verbindungen sind z. B. in High Polymers, Vol. XVI, "Polyurethanes, Chemistry and Technology", verfaßt von Saunders-Frisch, Interscience Publishers, New York, London, Band I, 1962, Seiten 32 - 42 und Seiten 44 - 54 und Band II, 1964, Seiten 5 - 6 und 198 - 199, sowie im Kunststoff-Handbuch, Band VII, Vieweg-Höchtlen, Carl-Hanser-Verlag, München, 1966, z. B. auf den Seiten 45 bis 71, beschrieben.

Selbstverständlich können Mischungen der oben genannten Verbindungen mit mindestens zwei gegenüber Isocyanaten reaktionsfähigen Wasserstoffatomen mit einem Molekulargewicht von 400 bis 10.000, z. B. Mischungen von Polyethern und Polyestern, eingesetzt werden.

Als erfindungsgemäß einzusetzende Ausgangskomponenten kommen weiter aliphatische, cycloaliphatische, araliphatische, aromatische und heterocyclische Polyisocyanate in Betracht, wie sie z. B. von W. Siefken in Justus Liebigs Annalen der Chemie, 562, Seiten 75 bis 136, beschrieben werden, beispielsweise Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat, Naphthylen-1,5-diisocyanat, Triphenylmethan-4,4'4"-triisocyanat, Polyphenyl-polymethylen-polyisocyanate, wie sie durch Anilin-Formaldehyd-Kondensation und anschließende Phosgenierung erhalten und z. B. in den britischen Patentschriften 874 430 und 848 671 beschrieben werden, perchlorierte Arylpolyisocyanate, wie sie z. B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der amerikanischen Patentschrift 3 492 330 beschrieben werden, Allophanatgruppen aufweisende Polyisocyanate, wie sie z. B. in der britischen Patent schrift 994 890, der belgischen Patentschrift 761 626 und der veröffentlichten holländischen Patentanmeldung 7 102 524 beschrieben werden, Isocyanatgruppen aufweisende Polyisocyanate, wie sie z. B. in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z. B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z. B. in der deutsche Patentschrift 1 101 394, in der britischen Patentschrift 889 050 und in der französischen Patentschrift 7 017 514 beschrieben werden, durch Telomerisationsreaktionen hergestellte Polyisocyanate, wie sie z. B. in der belgischen Patentschrift 723 640 beschrieben werden, Estergruppen aufweisende Polyisocyanate, wie sie z. B. in den britischen

Patentschriften 965 474 und 1 072 956, in der amerikanischen Patentschrift 3 567 763 und in der deutschen Patentschrift 1 231 688 genannt werden, sowie Umsetzungsprodukte der obengenannten Isocyanate mit Acetalen gemäß der deutschen Patentschrift 1 072 385.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen dieser Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Die Polyisocyanate bzw. die aus den genannten Polyisocyanaten und den oben erwähnten höher- und/oder niedermolekularen Polyolen hergestellten Isocyanat-Prepolymeren sollen bei der Reaktion mit dem gepulverten bzw. suspendierten aromatischen Diamin in flüssiger Form vorliegen.

Sollen nach dem erfindungsgemäßen Verfahren Polyurethanschäume hergestellt werden, dann werden Wasser und/oder leicht flüchtige organische Substanzen als Treibmittel mitverwendet. Als organische Treibmittel kommen z. B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage. Die Treibwirkung kann auch durch Zusatz von bei höheren Temperaturen unter Abspaltung von Gasen, beispielsweise von Stickstoff, sich zersetzenden Verbindungen, z. B. Azoverbin dungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 und 455 und 507 bis 510 beschrieben.

Erfindungsgemäß können ferner oft Katalysatoren mitverwendet werden. Als mitzuverwendende Katalysatoren kommen solche der an sich bekannten Art in Frage, z. B. tertiäre Amine, wie Triethylamin, Tributylamin, N-Methyl-morpholin, N-Ethyl-morpholin, N,N,N',N'-Tetramethyl-ethylendiamin, 1,4-Diaza-bicyclo-(2,2,2)-octan, N-Methyl-N'-dimethylaminoethyl-piperazin, N,N-Dimethylbenzylamin, Bis-(N,N- diethylaminoethyl)-adipat, N,N-Diethylbenzylamin, Pentamethyldiethylentriamin, N,N-Dimethylcyclohexylamin, N,N,N',N'-Tetramethyl-1,3-butandiamin, N,N-Dimethyl-ß-phenylethylamin, 1,2-Dimethylimidazol und 2-Methylimidazol.

Gegenüber Isocyanatgruppen aktive Wasserstoffatome aufweisende tertiäre Amine sind z. B. Triethanolamin, Triisopropanolamin, N-Methyl-diethanolamin, N-Ethyl-diethanolamin, N,N-Dimethyl-ethanolamin sowie deren Umsetzungsprodukte mit Alkylenoxiden wie Propylenoxid und/ oder Ethylenoxid.

Als Katalysatoren kommen ferner Silaamine mit Kohlenstoff-Silizium-Bindungen, wie sie z. B. in der deutschen Patentschrift 1 229 290 beschrieben sind, in Frage, z. B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn(II)-salze von Carbonsäuren wie Zinn(II)-acetat, Zinn(II)-octoat, Zinn(II)-ethylhexoat und Zinn(II)-laurat und die Dialkylzinnsalze von Carbonsäuren, wie z.B. Dibutyl-zinndiacetat, Dibutylzinn-dilaurat, Dibutylzinnmaleat oder Dioctylzinn-diacetat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Menge an Polyhydroxyl-Verbindungen mit einem Molekulargewicht von 400 bis 10.000, eingesetzt.

Erfindungsgemäß können auch oberflächenaktive Zusatzstoffe (Emulgatoren und Schaumstabilisatoren) mitverwendet werden. Als Emulgatoren kommen z. B. die Natriumsalze von Ricinusölsulfonaten oder auch von Fettsäuren oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in der amerikanischen Patentschrift 2 764 565 beschrieben.

Erfindungsgemäß können ferner auch Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trischlorethylphosphat oder Ammoniumphosphat und -Polyphosphat, ferner Stabilisatoren gegen Alterungs- und Witterungseinflüsse, Weichmacher und fungistatisch und bakte riostatisch wirkende Substanzen, Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z. B. auf den Seiten 103 bis 113 beschrieben.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der amerikanischen Patentschrift 2 764 565 beschrieben werden. Einzelheiten über Verarbeitungseinrichtungen, die auch erfindungsgemäß infrage kommen, werden im Kunststoff-Handbuch, Band VI, herausgegeben von Vieweg und Höchtlen, Carl-Hanser-Verlag, München 1966, z. B. auf den Seiten 121 bis 205 beschrieben.

Die Mengen an Reaktionskomponenten werden im erfindungsgemäßen Verfahren in der Regel so gewählt, daß das Molverhältnis von Polyisocyanaten zu Kettenverlängerer plus Verbindung mit reaktionsfähigen OH-Gruppen - abhängig vom jeweils angewendeten Verarbeitungsverfahren - in der Regel zwischen 0,7 und 1,5 liegt, vorzugsweise zwischen 0,90 und 1,15. Der Prozentgehalt an NCO im Prepolymer, falls über die Prepolymerstufe gearbeitet wird, kann 1,8 bis 6 Gew.-% betragen. Das Molverhältnis von reaktionsfähigem Wasserstoff des Kettenverlängerers zu reaktionsfähigen OH-Gruppen kann in weiten Grenzen variieren, vorzugsweise soll es zwischen 0,4 und 1,5 liegen, wobei weiche bis harte Polyurethan-Typen resultieren- Neben den erfindungsgemäß zu verwendenden Diaminen können als Kettenverlängerer anteilsweise auch weitere Diamine oder auch Diole eingesetzt werden, z. B. solche, wie sie oben bei der Herstellung der Polyhydroxylverbindungen genannt wurden. Der Molenbruch des erfindungsgemäßen Amins im Kettenverlängerer soll aber zwischen 1 und 0,5 liegen, vorzugsweise zwischen 1 und 0,8.

Die Durchführung des erfindungsgemäßen Verfahrens kann auch in einem 2-Stufen-Verfahren erfolgen.

Die mindestens zwei Hydroxylgruppen aufweisende Polyolkomponente vom Mol-Gew. 400 bis 10.000 wird in an sich bekannter Weise mit einem Übermaß an Diisocyanat zu dem NCO-Gruppen aufweisenden Voraddukt umgesetzt. Durch NCO-Titration kann der Verlauf der Umsetzung kontrolliert werdend Nach Beendigung der Polyaddition wird den Diamin in Form eines festen Pulvers (Teilchengröße = 5 bis 50 $\mu$m) unter Verwendung eines geeigneten Rührgeräts eingetragen und die entstehende Suspension innig vermischt.

Man kann aber auch so verfahren, daß das feste Diamin-Pulver zunächst in wenig dem NCO-Voraddukt zugrunde liegendem hochmolekularem flüssigem Polyol vermischt wird. Die so erhaltene Paste oder noch gießbare Suspension kann dann dem NCO-Voraddukt zugesetzt werden. Dieses Verfahren bietet den Vorteil der einfachen Durchführbarkeit.

Es ist aber auch möglich, die Reaktionskomponente im Einstufenverfahren (one-shot Verfahren) umzusetzen. Hierbei werden die Ausgangskomponenten, bestehend aus einem hochmolekularen Polyol, dem Polyisocyanat, dem festen Diamin und gegebenenfalls den Hilfs- und Zusatzstoffen, nach dem Abmischen zur Reaktion gebracht, indem der Ansatz auf die erforderliche Verfestigungstemperatur gebracht wird (140 bis 200 °C). Die Verfestigung kann aber auch schrittweise erfolgen, wenn man die Reaktion des Polyisocyanates mit dem Polyol zunächst bei niedrigerer Temperatur (60 bis 100 °C) ablaufen läßt. Bei dieser Temperatur reagiert das in fester Form vorliegende Diamin noch nicht. Man erhält zunächst ein unter Druck verformbares Material. Die Endverfestigung kann dann zu einem beliebigen Zeitpunkt erfolgen, wobei bei 150 bis 180 °C die Endwerte erreicht werden (vgl. Beispiel).

Die Temperatur bei der Zugabe des Kettenverlängerers hängt von der Beschaffenheit des NCO-Voradduktes ab.

Bei flüssigen NCO-Voraddukten wird der Kettenverlängerer (in Substanz aber bevorzugt in Polyol/Suspension) bei Raumtemperatur zugesetzt. Bei hochwirksamen oder festen NCO-Prepolymeren

erfolgt die Zugabe bei derjenigen Temperatur, bei der ein einwandfreier Gießverlauf der Ansätze gewährleistet ist. Diese Temperatur kann dann bei 60 bis 80 °C liegen. Eine Vorreaktion der NCO-Prepolymeren und des aromatischen Diamins darf jedoch in keinem Falle erfolgen, da jegliche unkontrollierbare Viskositätserhöhung des Ansatzes die weitere Verarbeitung im normalen Gießverfahren erschwert.

Nach Zugabe des Diamins wird der Reaktionsansatz nach kurzer Zeit im Vakuum entgast.

Die Verarbeitung der erfindungsgemäßen Reaktivsysteme richtet sich nach deren Beschaffenheit. Flüssige, bei Raumtemperatur gießbare Systeme lassen sich im Gießprozeß verarbeiten, gegebenenfalls werden sie vor der Verarbeitung kurz erwärmt, z. B. auf 50 bis 70 °C.

Nicht mehr gießbare, aber noch verlaufende Systeme können z. 9. mit einer Rakel auf gewünschte Unterlagen aufgebracht werden und anschließend durch Hitzestoß verfestigt werden.

Plastische Systeme (Pasten) können unter Druck- und Formgebung in der Hitze verpreßt werden.

Feste Systeme, insbesondere auf Basis höherschmelzender Ausgangspolyole (45 bis 65 °C) werden entweder unter Druck und Formgebung (Spritzguß) oder etwa bei oder oberhalb der Schmelztemperatur des Polyols verarbeitet.

Man kann so verfahren, daß man die vorher hergestellten Langzeitsysteme in Form fester Granulate in eine über den Schmelzpunkt des Polyols aufgewärmte Form (im allgemeinen unterhalb 70 °C) einbringt. Danach wird nach dem Aufschmelzen der Granulate und der damit gegebenen Werkzeugfüllung die Form auf 130 bis 200 °C erwärmt und der Inhalt verfestigt.

Die Verfestigungstemperatur der erfindungsgemäßen Reaktivsysteme liegt in einem Bereich von 130 bis 200 °C.

Erfindungsgemäß hergestellte Elastomere finden vielseitige Anwendung, z. B. für mechanisch stark beanspruchte Formkörper wie Reifen, Rollen, Keilriemen oder Dichtungen, die thermisch oder chemisch stark beansprucht werden, für Heißwasserrohre oder Motoren oder zur Herstellung von Folien, Textilbeschichtungen und Polyurethanpulvern.

Die Kettenverlängerung kann auch in Gegenwart der oben beschriebenen Treibmittel und Zusatzstoffe, bevorzugt in geschlossenen Formen, ausgeführt werden, wobei Schäume mit zelligem Kern und kompakter Oberfläche gebildet werden.

Die nach dem erfindungsgemäßen Verfahren zugänglichen elastischen und halbelastischen Schaumstoffe werden beispielsweise als Polstermaterialien, Matratzen, Verpackungsmaterial und wegen ihrer Flammfestigkeit auch in jenen Bereichen verwendet, wo diese Eigenschaften besonders wichtig sind, wie z. B. im Automobil- und Flugzeugbau und im allgemeinen Verkehrswesen. Die Schaumstoffe können dabei entweder nach dem Formschäumungsverfahren hergestellt werden oder durch Konfektionierung aus blockgeschäumtem Material erhalten werden.

Die folgenden Beispiele erläutern das erfindungsgemäße Verfahren. Wo nicht anders vermerkt, sind Zahlenwerte als Gewichtsteile bzw. Gewichtsprozente zu verstehen.

Beispiel 1 (Prepolymerverfahren)
Allgemeine Arbeitsvorschrift:

Die endständig NCO-Gruppen aufweisenden Voraddukte werden in an sich bekannter Verfahrensweise aus 1 Mol Polyol und 2 Mol 2,4-Diisocyanato-toluol (TDI) bei 60 bis 80 °C hergestellt. Der zeitliche Ablauf der Polyaddition kann über eine einfache NCO-Titration gut verfolgt werden. In einem Falle (vgl. Produkt b) wurde das noch in geringer Menge vorhandene monomere TDI mittels eines Dünnschichtverdampfers entfernt.

Zur Herstellung der Elastomere werden 200 g des betreffenden NCO-Voradduktes bei 50 bis 60 °C unter Rühren mittels eines Wasserstrahlvakuums gründlich entgast. Danach wird das Diamin in Form eines feinen Pulvers (Teilchengröße 5 bis 50 nm) dem NCO-Voraddukt zugesetzt. Das Verhältnis Mol NCO/Mol OH beträgt hierbei 1,1. Die so erhaltene NCO-Voraddukt/Diamin-Suspension ist bei der angegebenen Temperatur einwandfrei verarbeitbar und wird unter weiterem Entgasen gut homogenisiert. Man erhält schließlich Reaktiv-Systeme, die sich bei Ausschluß von Luftfeuchtigkeit bei Raumtemperatur und erhöhter Temperatur über einen Zeitraum von einigen Monaten lagerstabil verhalten und keine wesentliche Viskositätserhöhungen während der Lagerung zeigen.

Die Verfestigung erfolgt in einem Temperaturbereich von 150 bis 180 °C. In vorliegenden Fällen wurden die in eine mit Trennmittel versehene Form gegossenen Ansätze 2 bis 4 Stunden bei 170 bis 180 °C gehalten. Danach wurde der Probekörper aus der heißen Form genommen. Nach einer Lagerung von mehreren Tagen bei Raumtemperatur zeigten die Prüfkörper untenstehende Eigenschaften.

Als $NH_2$-Gruppen enthaltender Kettenverlängerer wurde in den vorliegenden Beispielen das Diamin der Formel:

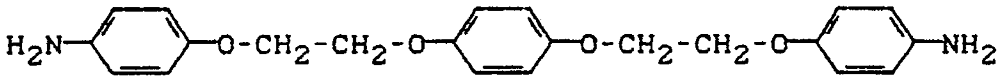

verwendet.

Zur Herstellung der NCO-Voraddukte kamen folgende Polyole zum Einsatz (Polyisocyanatkomponente : 2,4-Diisocyanato-toluol).

Ausgangspolyole:

a) Polyester
aus Adipinsäure und Ethylenglykol, Molekulargewicht 2000,
OH-Zahl: 56
NCO-Voraddukt: 3,85 % NCO
b) Polyester
aus Adipinsäure und einem Gemisch aus Ethylenglykol und 1,4-Butandiol (Molverhältnis 1:1) : Mol-Gewicht 2000, OH-Zahl 56
NCO-Voraddukt: 3,3 % NCO (gedünnschichtet)
c) Polyester (Hexandiolpolyetherestercarbonat)
aus Diphenylcarbonat und einem Polykondensationsprodukt aus 1,6-Hexandiol, Mol-Gewicht 2000, OH-Zahl: 56 (vgl. DE-OS 3 717 060)
NCO-Voraddukt: 3,5 % NCO
d) Polycaprolacton, Mol-Gewicht 2000, OH-Zahl: 56
NCO-Voraddukt: 3,6 %
e) Polytetrahydrofuranetherdiol, Mol-Gewicht 2000,
OH-Zahl: 56
NCO-Voraddukt: 3,5 %
f) Polypropylenglykolether, Mol-Gewicht 2000,
OH-Zahl: 56

Mechanisches Eigenschaftsniveau der hergestellten Elastomere.

Ansatz: 200 g Voraddukt

| | a) | b) | c) | d) | e) | f) |
|---|---|---|---|---|---|---|
| Voraddukt NCO-Gehalt | 3,85 | 3,3 | 3,5 | 3,6 | 3,5 | 3,5 |
| Menge/g Diamin | 31,6 | 27,0 | 28,7 | 29,5 | 28,7 | 28,7 |
| Modul 100 % MPa | 7,4 | 7,0 | 5,5 | 6,2 | 4,5 | 2,5 |
| Modul 300 % MPa | 16,1 | 12,5 | 9,8 | 11,1 | 8,5 | 4,0 |
| Zugfestigkeit MPa | 40,7 | 45,8 | 21,8 | 24,4 | 15,8 | 8,5 |
| Bruchdehnung % | 550 | 480 | 400 | 400 | 380 | 480 |
| Weiterreißfestigkeit KN/m | 85,8 | 67,9 | 42,8 | 45,5 | 28,2 | 26,7 |
| Elastizität % | 40 | 45 | 50 | 52 | 58 | 38 |
| Härte Shore A | 92 | 90 | 87 | 91 | 84 | 72 |

Beispiel 2 (Einstufenverfahren)

200 g (0,1 Mol) eines linearen Polyesters auf Basis von Adipinsäure und Ethylenglykols (Molgewicht 2000, OH-Zahl: 56) werden bei 50 bis 60 °C aufgeschmolzen. Unter Rühren werden 4,5 g (0,05 Mol) 1,4-Butandiol und danach 19,0 g 1,4-Bis-(2-(4-aminophenoxy)-ethoxy)-benzol in fester Form zugesetzt. Insgesamt stehen 0,3 Mol OH- und 0,1 Mol $NH_2$-Gruppen für die Polyaddition mit dem Isocyanat zur Verfügung. Zur Vernetzung der OH-Komponente (Polyester und 1,4-Butandiol) werden 37,5 g (0,15 Mol) geschmolzenes 4,4'-Diisocyanatodiphenylmethan (MDI) und für den Anteil der $NH_2$-Komponente (Diamin) 10,5 g (0,05 Mol) 1,5-Diisocyanato-naphthalin (NDI) in Form eines Pulvers eingerührt. Die Schmelzsuspension ist bei 50 bis 60 °C gut fließfähig und kann daher ohne Schwierigkeiten in eine mit Glasfasermatten versehene Form eingegossen werden. Nach einigen Stunden bei ca. 60 °C erhält man ein anvernetztes aber noch thermoplastisches Material, in dem die Glasfasermatten eingebettet sind. Die Reaktion der OH-Komponenten mit dem MDI ist zum großen Teil beendet. Das aromatische Diamin befindet sich noch im unreagierten Zustand. Dieses Vorprodukt (PREPREG) ist unter Ausschluß der Luftfeuchtigkeit bei Raumtemperatur und erhöhter Temperatur lagerstabil. Zu einem beliebigen Zeitpunkt kann es jedoch bei einer Vernetzungstemperatur von 150 bis 180 °C unter Druck und Formgebung verfestigt werden. Man erhält dann ein mit Glasfaser verstärktes zähes Endprodukt mit einer Shore-A Härte von 92 bis 94 und beachtlich hohen Wärmestand.

Beispiel 3 (Semi-Prepolymerverfahren)

Durch Umsetzung von 800 g eines linearen Polyetherpolyols, hergestellt durch Addition von Propylenoxid an Wasser (Mol-Gewicht 2000, OH-Zahl: 56), mit 258 g 4,4'-Diisocyanato-diphenylmethan erhält man bei 80 °C in üblicher Verfahrenstechnik ein NCO-Gruppen enthaltendes Semiprepolymer mit einem NCO-Gehalt von 4,9 % (theor. 5,0 %).

105 g dieses Semiprepolymers werden bei Raumtemperatur mit 20 g des in Beispiel 1 beschriebenen festen Diamins gründlich vermischt. Die bei Raumtemperatur lagerstabile Suspension wird mittels eines Wasserstrahlvakuums entgast. Das flüssige Reaktivsystem wird in eine mit Trennmittel versehene Form gegossen, die dann auf 180 °C aufgeheizt wird. Nach 2 Stunden erfolgt die Verfestigung des Ansatzes und das Formteil kann aus der Form genommen werden.

Man erhält ein elastisches Polyurethanharnstoff-Elastomer mit guter Oberfläche und einer Härte von 90 Shore A.

## Ansprüche

1. Verfahren zur Herstellung von Polyurethanharnstoff-Elastomeren aus
   a) Verbindungen mit mindestens zwei gegenüber Isocyanatgruppen reaktionsfähigen Gruppen des Molgewichts 400 bis 10 000, vorzugsweise 400 bis 6000,
   b) Polyisocyanaten,
   c) aromatischen Diaminoverbindungen sowie gegebenenfalls
   d) in der Polyurethanchemie an sich bekannten Hilfs- und Zusatzstoffen,

   dadurch gekennzeichnet, daß als aromatische Diaminoverbindungen solche der allgemeinen Formel

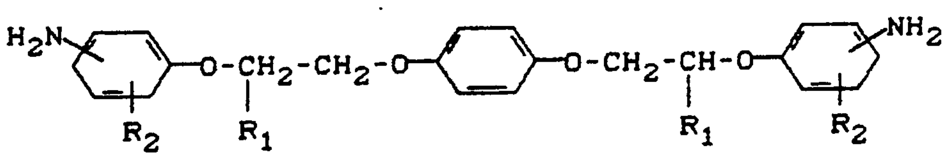

   bei denen sich die Aminogruppen in o-, m- oder p-Stellung zum Ether-Sauerstoff befinden und $R_1$ und $R_2$ Wasserstoff oder Alkylgruppen, vorzugsweise Methylgruppen, bedeuten, eingesetzt werden.

2. Verfahren nach Anspruch 1, dadurch gekennzeichnet, daß das aromatische Diamin in Form eines Pulvers in dem hochmolekularen Polyol mit dem Molgewicht von 400 bis 10 000, vorzugsweise 400 bis

6000, suspendiert vorliegt und die Polyaddition mit dem Polyisocyanat bei Temperaturen unterhalb des Schmelzpunktes des Diamins in heterogener Phase erfolgt.

3. Verfahren nach Anspruch 1, dadurch gekennzeichnet, daß als hochmolekulare Ausgangsverbindung ein aus a) und b) und gegebenenfalls d) hergestelltes NCO-Voraddukt verwendet wird, in dem das feste Diamin in Form eines Pulvers suspendiert vorliegt.

4. Verfahren nach einem der Ansprüche 1 bis 3, dadurch gekennzeichnet, daß ein hochmolekulares Polyol a) verwendet wird, in dem sich das aromatische Diamin bei niedriger Temperatur nur schlecht in der Hitze jedoch wesentlich besser löst.

5. Verfahren nach einem der Ansprüche 1 bis 4, dadurch gekennzeichnet, daß als hochmolekulare Verbindung mit mindestens zwei gegenüber NCO-Gruppen reaktionsfähigen Gruppen ein Polyester mit einem Molgewicht von 400 bis 10 000, vorzugsweise 400 bis 6000 verwendet wird.

6. Verfahren nach einem der Ansprüche 1 bis 5, dadurch gekennzeichnet, daß als aromatisches Diamin 1,4-Bis(2-(4-aminophenoxy)ethoxy)-benzol der Formel:

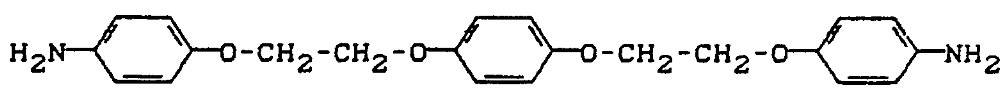

verwendet wird.

7. Verfahren gemäß einem der Ansprüche 1 bis 6, dadurch gekennzeichnet, daß das aromatische Diamin in Form eines Pulvers mit der Teilchengroße von 1 bis 100, vorzugsweise 1 bis 50 µm (Micrometer) eingesetzt wird.

8. Verfahren gemäß einem der Ansprüche 1 bis 7, dadurch gekennzeichnet, daß das aromatische Diamin in Form einer Suspension in wenig Polyol vorliegt und daß dieses Gemisch als "Kettenverlängerer" verwendet wird, wobei das Gewichtsverhältnis Diamin zu Polyol 1,0:0,5 bis 5,0, vorzugsweise 1,0:1,0 bis 2,0 beträgt.

9. Verfahren gemäß einem der Ansprüche 1 bis 8, dadurch gekennzeichnet, daß eine Diamin/Polyol Suspension eingesetzt wird, bei der 0,05 bis 20 % $NH_2$-Äquivalente in einem vorangegangenen Arbeitsschritt mit einem Polyisocyanat umgesetzt wurden.

10. In heterogener Phase vorliegende Gemische aus endständig NCO-Gruppen aufweisenden Voraddukten (NCO-Prepolymere) mit einem Molgewicht von 400 bis 10 000, vorzugsweise 400 bis 6000 und einem aromatischen Diamin der allgemeinen Formel

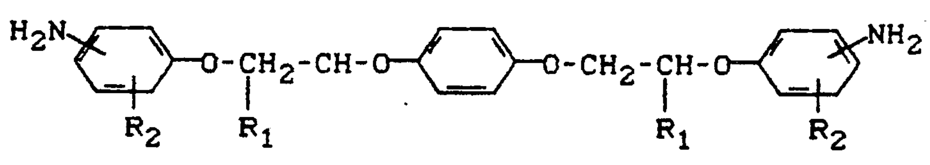

bei dem sich die $NH_2$-Gruppen in o-, m- oder p-Stellung zum Ether-Sauerstoff befinden und $R_1$ und $R_2$ Wasserstoff oder Alkylgruppen, vorzugsweise Methylgruppen, bedeuten.